# EUROPÄISCHE PATENTANMELDUNG

(11) **EP 4 220 071 A1**
(43) Veröffentlichungstag der Anmeldung: **02.08.2023**
(21) Anmeldenummer: 22153944.8
(22) Anmeldetag: 28.01.2022
(51) Int. Cl.: G01B 5/20, G01B 11/24, G01B 5/008, G01B 11/00, B23F 23/12, B24B 19/00, B24B 49/02

(54) **VERFAHREN UND KOORDINATENMESSMASCHINE**

(71) Anmelder: Klingelnberg GmbH, 42499 Hückeswagen (DE)
(72) Erfinder: Finkeldey, Markus, 45527 Hattingen (DE); Merkert, Jan, 51688 Wipperfürth (DE)
(74) Vertreter: Janke Scholl Patentanwälte PartG mbB

(57) **Zusammenfassung**

Verfahren, mit den Verfahrensschritten: Bereitstellen eines verzahnten Bauteils (10) auf einer Koordinatenmessmaschine (2), wobei die Koordinatenmessmaschine (2) einen ersten Sensor (4) zum Messen geometrischer Merkmale des verzahnten Bauteils (10) aufweist, einen zweiten Sensor (6) zum Messen geometrischer Merkmale des verzahnten Bauteils (10) aufweist und Bewegungsachsen zum Ausführen einer Messbewegung zur Erfassung von Messwerten an dem verzahnten Bauteil (10) aufweist; Erstes Messen eines geometrischen Merkmals des verzahnten Bauteils (10) mittels des ersten Sensors (4) und/oder des zweiten Sensors (6), wie eine Zahnteilung, eine Flankenlinie einer Zahnflanke, eine Profillinie einer Zahnflanke oder dergleichen, wobei eine erste relative Messbewegung zum Abfahren eines ersten Messwegs (12, 14) ausgeführt wird, wobei einer oder mehrere erste Messwerte zur Bestimmung des geometrischen Merkmals erfasst werden; Zweites Messen eines geometrischen Merkmals des verzahnten Bauteils (10) mittels des ersten Sensors (4) und/oder des zweiten Sensors (6), wie eine Zahnteilung eine Flankenlinie einer Zahnflanke, eine Profillinie einer Zahnflanke oder dergleichen, wobei eine zweite relative Messbewegung zum Abfahren eines zweiten Messwegs ausgeführt wird, wobei zweite Messwerte zur Bestimmung des geometrischen Merkmals erfasst werden; wobei eine Auswertung der zweiten Messung unter Berücksichtigung einer aus der ersten Messung bekannten Achsposition erfolgt.

## Beschreibung

Gegenstand der Erfindung sind ein Verfahren zum Messen eines Bauteils sowie eine Koordinatenmessmaschine zur Ausführung eines solchen Verfahrens.

Zahnräder werden häufig taktil, d.h. mechanisch tastend, auf Koordinatenmessmaschinen vermessen. Taktile Messverfahren sind sehr präzise, weisen jedoch den Nachteil einer hohen Messdauer auf. So muss ein das Zahnrad abtastender Messtaster in jede Lücke der Verzahnung eingefädelt, mit der abzutastenden Zahnflanke in Anlage gebracht und nach dem Abtasten der Zahnflanke wieder aus der Lücke zurückgezogen werden. Anschließend wird der Messtaster in die nächste zu messende Zahnlücke eingefädelt und der Vorgang wird wiederholt.

Die Leistungsfähigkeit rein optisch, d.h. berührungslos messender Sensoren zur Messung der Geometrie einer Verzahnung hat sich in den vergangenen Jahren stark verbessert. Koordinatenmessmaschinen zur Verzahnungsmessung weisen daher zunehmend optische Sensoren auf, die alternativ oder ergänzend zu taktilen Messtastern eingesetzt werden. Beispiele optischer Sensoren zur Verfahrungsmesstechnik sind Kameras, Systeme zur Lasertriangulation, interferometrische Systeme, konfokale oder konfokal chromatische Systeme, Systeme zur Streifenlichtprojektion oder Fokusvariation.

Soweit ein geometrisches Merkmal des verzahnten Bauteils bereits durch einen Sensor bestimmt worden ist, kann ein weiterer Sensor anhand der bereits bekannten Messdaten für einen weitere Messung vorpositioniert werden, bevor der weitere Sensor die Messung startet. Hierbei ist nachteilig, dass das Vorpositionieren ein Beschleunigen und Abbremsen des weiteren Sensors und/oder des verzahnten Bauteils erfordert, bevor die eigentliche Messung durch ein erneutes Anfahren und damit ein erneutes Beschleunigen der Maschinenachsen ausgeführt wird.

Vor diesem Hintergrund liegt der vorliegenden Erfindung die technische Problemstellung zugrunde, ein Verfahren und eine Koordinatenmessmaschine anzugeben, die eine effizientere Messung verzahnter Bauteile ermöglichen.

Die voranstehend beschriebene technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Bereitstellen eines verzahnten Bauteils auf einer Koordinatenmessmaschine, wobei die Koordinatenmessmaschine einen ersten Sensor zum Messen geometrischer Merkmale des verzahnten Bauteils aufweist, einen zweiten Sensor zum Messen geometrischer Merkmale des verzahnten Bauteils aufweist und Bewegungsachsen zum Ausführen einer Messbewegung zur Erfassung von Messwerten an dem verzahnten Bauteil aufweist; Erstes Messen eines geometrischen Merkmals des verzahnten Bauteils mittels des ersten Sensors und/oder des zweiten Sensors, wie eine Zahnteilung, eine Flankenlinie einer Zahnflanke, eine Profillinie einer Zahnflanke oder dergleichen, wobei eine erste relative Messbewegung zum Abfahren eines ersten Messwegs ausgeführt wird, wobei einer oder mehrere erste Messwerte zur Bestimmung des geometrischen Merkmals erfasst werden; Zweites Messen eines geometrischen Merkmals des verzahnten Bauteils mittels des ersten Sensors und/oder des zweiten Sensors, wie eine Zahnteilung, eine Flankenlinie einer Zahnflanke, eine Profillinie einer Zahnflanke oder dergleichen, wobei eine zweite relative Messbewegung zum Abfahren eines zweiten Messwegs ausgeführt wird, wobei zweite Messwerte zur Bestimmung des geometrischen Merkmals erfasst werden. Das Verfahren zeichnet sich dadurch aus, dass eine Auswertung der zweiten Messung unter Berücksichtigung einer aus der ersten Messung bekannten Achsposition erfolgt.

Durch die Berücksichtigung der Achsposition im Rahmen der Auswertung kann erreicht werden, dass eine numerisch stabile und wiederholbare Auswertung der Ergebnisse erfolgen kann, da die Messwerte beispielsweise immer mit einem vergleichbaren Auswertebeginn ausgewertet werden können, so dass z.B. sichergestellt werden kann, dass die Auswertung der Messwerte immer auf einem Zahnkopf des gemessenen verzahnten Bauteils beginnt.

Wenn vorliegend von einer Achsposition gesprochen wird, so handelt es sich dabei nicht um einen an dem verzahnten Bauteil erfassten Messwert, sondern um eine Position von Maschinenachsen der Koordinatenmessmaschine.

Wenn vorliegend von einem Messwert gesprochen wird, so handelt es sich dabei um einen an dem verzahnten Bauteil gemessenen Messwert, der aus einem Sensorwert des ersten oder zweiten Sensors und aus einer Achsposition der Maschinenachsen der Koordinatenmessmaschine berechnet wird. Ein solcher Sensorwert kann für einen taktilen Messtaster beispielsweise eine gemessene Auslenkung sein, die der Messtaster infolge eines Antastens einer Oberfläche des verzahnten Bauteils erfährt. Ein solcher Sensorwert kann für einen optischen Sensor beispielsweise ein gemessener Abstand sein, den der optische Sensor zu einem Fokuspunkt auf einer Oberfläche des verzahnten Bauteils aufweist.

Es kann vorgesehen sein, dass vor dem zweiten Messen kein Vorpositionieren des zweiten Sensors relativ zum verzahnten Bauteil anhand eines aus der ersten Messung bekannten Messwerts erfolgt. Auf diese Weise kann die Anzahl der zum zweiten Messen erforderlichen Beschleunigungsvorgänge reduziert werden, da kein Vorpositionieren und erneutes Anfahren zum Messen, sondern lediglich die Messbewegung mit einem Beschleunigungsvorgang zu Beginn der Messung und einem Abbremsvorgang zum Ende der Messung erfolgt. Das Beschleunigen und Abbremsen des Vorpositionierens können daher entfallen. Der Messvorgang kann auf diese Weise verkürzt und der Verschleiß der Koordinatenmessmaschine reduziert werden, da je Messvorgang weniger Achsbeschleunigungen erforderlich sind.

Gemäß einer Ausgestaltung des Verfahrens kann vorgesehen sein, dass anhand der Achsposition eine Reihenfolge der zweiten Messwerte für die Auswertung der zweiten Messung bestimmt wird. Beispielsweise kann jedem Messwert der zweiten Messung ein Drehwinkel einer Drehachse der Koordinatenmessmaschine und/oder eine Achsposition einer Linearachse zugeordnet sein, wobei die Reihenfolge der Auswertung beispielsweise nach aufsteigendem oder absteigendem Wert des zugeordneten Drehwinkels und/oder nach aufsteigendem oder absteigendem Wert der zugeordneten Achsposition erfolgen kann.

Alternativ oder ergänzend kann vorgesehen sein, dass anhand der Achsposition ein Messwert der zweiten Messwerte als Startpunkt der Auswertung der zweiten Messung festgelegt wird. Insbesondere kann beispielsweise ein Messwert der zweiten Messwerte als Startpunkt gewählt werden, von dem aufgrund der Achsposition aus der ersten Messung bekannt ist, dass dieser Messwert auf einem Zahnkopf des verzahnten Bauteils liegt.

Alternativ oder ergänzend kann vorgesehen sein, dass in der Auswertung anhand der Achsposition diejenigen Messwerte der zweiten Messwerte ermittelt werden, die nicht zur Bestimmung des geometrischen Merkmals gemäß der zweiten Messung erforderlich sind. So können z.B. Messwerte eines Messbeginns der zweiten Messung nicht ausgewertet werden oder verworfen werden oder nicht als Startpunkt der Auswertung verwendet werden. Insbesondere können z.B. diejenigen Messwerte des Messbeginns der zweiten Messung nicht ausgewertet werden oder verworfen werden oder nicht als Startpunkt der Auswertung verwendet werden, die nicht auf einem Zahnkopf des verzahnten Bauteils liegen, so dass sichergestellt werden kann, dass die Auswertung mit Messwerten eines Zahnkopfs des verzahnten Bauteils beginnt.

Es kann vorgesehen sein, dass in der Auswertung ein virtuelles Inbezugsetzen der Messwerte der zweiten Messung relativ zum verzahnten Bauteil erfolgt, um einen geeigneten Startpunkt für die Auswertung zu bestimmen. Es kann vorgesehen sein, dass das virtuelle Inbezugsetzen einem Verschieben und/oder einer Drehung eines Koordinatensystems der Messung in einen Startpunkt der Auswertung und einer Filterung der zweiten Messwerte entspricht.

Insbesondere kann vorgesehen sein, dass ein in der Auswertung durchgeführtes virtuelles Inbezugsetzen der Messwerte der zweiten Messung relativ zum verzahnten Bauteil z.B. dadurch erfolgt, dass einer der zweiten Messwert als Startpunkt der Auswertung der zweiten Messung festgelegt wird, der auf einem Zahnkopf des verzahnten Bauteils liegt und die Auswertung z.B. nach aufteigendem Wert des zugeordneten Drehwinkels erfolgt, d.h. mit vorgegebenem Drehsinn erfolgt. Das virtuelle Inbezugsetzen ermöglicht es daher, dass die Auswertung der Messwerte der zweiten Messung wiederholgenau und reproduzierbar durchgeführt werden kann und insbesondere eine numerische Stabilität der Auswertung sichergestellt werden kann.

Es kann vorgesehen sein, dass der zweite Messweg eine Länge aufweist, die größer ist als eine zur Bestimmung des mittels der zweiten Messung zu bestimmenden geometrischen Merkmals minimal erforderliche Länge. Soweit z.B. zur Messung eines zu bestimmenden geometrischen Merkmals eine Bauteilrotation um 360° erforderlich ist bzw. Messwerte über einen Winkelbereich von 360° erfasst werden müssen, kann der zweite Messweg eine Bauteilrotation von mehr als 360° aufweisen bzw. Messwerte über einen Winkelbereich von mehr als 360° erfasst werden. Insbesondere kann auf diese Weise ein virtuelles Inbezugsetzen im Rahmen der Auswertung ermöglicht werden, in dem Messwerte, die bis zu einem geeigneten Startpunkt für die Auswertung erfasst werden, zwar erfasst jedoch nicht als Startpunkt der Auswertung genutzt werden.

Alternativ oder ergänzend kann vorgesehen sein, dass der zweite Messweg einen ersten Wegabschnitt und einen zweiten Wegabschnitt hat, wobei entlang des ersten Wegabschnitts Zusatzmesswerte erfasst werden, die nicht zur Bestimmung des mittels der zweiten Messung zu bestimmenden geometrischen Merkmals des verzahnten Bauteils erforderlich sind und wobei entlang des zweiten Wegabschnitts diejenigen zweiten Messwerte erfasst werden, die zur Bestimmung des geometrischen Merkmals des verzahnten Bauteils erforderlich sind.

Gemäß einer Ausgestaltung des Verfahrens kann vorgesehen sein, dass aus der Achsposition ein Winkelinkrement und/oder ein Weginkrement bestimmt werden, die einen Abstand des für die zweite Messung verwendeten Sensors zu einer als Auswertebeginn geeigneten geometrischen Bezugsgröße des Bauteiles definieren, wie dem voranstehend beschriebenen Zahnkopf oder dergleichen.

Es kann vorgesehen sein, dass das Winkelinkrement und/oder ein Weginkrement einem zur Erfassung des mittels der zweiten Messung zu bestimmenden geometrischen Merkmals des verzahnten Bauteils minimal erforderlichen Messweg hinzugefügt werden, um den zweiten Messweg zu definieren. Der zur Erfassung des mittels der zweiten Messung zu bestimmenden geometrischen Merkmals des verzahnten Bauteils minimal erforderliche Messweg wird daher insbesondere um das Winkelinkrement und/oder ein Weginkrement ergänzt bzw. verlängert, um ein virtuelles Inbezugsetzen der der Messwerte der zweiten Messung relativ zum verzahnten Bauteil im Rahmen der Auswertung zu ermöglichen.

Gemäß einer Ausgestaltung des Verfahrens kann vorgesehen sein, dass das Winkelinkrement und/oder das Weginkrement dem zur Bestimmung des mittels der zweiten Messung zu bestimmenden geometrischen Merkmals des verzahnten Bauteils minimal erforderlichen Messweg vorangestellt werden, um ein virtuelles Inbezugsetzen der Messwerte der zweiten Messung relativ zum verzahnten Bauteil im Rahmen der Auswertung zu ermöglichen.

Es kann vorgesehen sein, dass zweite Messwerte, die entlang des Winkelinkrements und/oder des Weginkrements erfasst worden sind, nicht als Startpunkt der Auswertung festgelegt werden und/oder nicht zur Bestimmung des geometrischen Merkmals der zweiten Messung ausgewertet werden.

Gemäß einer Ausgestaltung des Verfahrens kann vorgesehen sein, dass die Achsposition eine Information zu einer relativen Position und/oder Orientierung des Zahnrads zu dem zur zweiten Messung verwendeten Sensor aufweist.

Es kann vorgesehen sein, dass der zweite Sensor ein optischer Sensor ist.

Gemäß einer Ausgestaltung des Verfahrens kann vorgesehen sein, dass die Achsposition eine Information zu einer relativen Winkellage einer optischen Achse des zweiten Sensors zu einem Bezugspunkt, einer Bezugslinine oder einer Bezugsfläche des verzahnten Bauteils aufweist, wie ein Zahnkopf, ein Zahnfuß, eine Kopfkante, eine Flankenlinie, eine Profillinie, eine Mitte eines Zahnkopfs, eine Mitte eines Zahnfußes, eine Mitte einer Zahnflanke oder dergleichen.

Es kann vorgesehen sein, dass der erste Sensor ein taktiler Sensor ist, wie ein Messtaster mit Tastkugel oder dergleichen. Der taktile Sensor kann ein schaltender oder eine scannender Messtaster sein.

Gemäß einer Ausgestaltung des Verfahrens kann vorgesehen sein, dass die erste Messung taktil mittels des taktilen Sensors erfolgt und dass die zweite Messung optisch mittels des optischen Sensors erfolgt.

Es kann vorgesehen sein, dass das Abfahren des zweiten Messwegs eine Rotation des verzahnten Bauteils um mehr als 360° um seine eigene Achse relativ zu dem zur zweiten Messung verwendeten Sensor aufweist.

Es kann vorgesehen sein, dass das Abfahren des zweiten Messwegs durch die Maschinenachsen der Koordinatenmessmaschine ausschließlich aus einer Bauteilrotation des Bauteils vor dem optischen Sensor besteht, wobei der optische Sensor während der Messung feststeht und während der Messung nicht bewegt wird.

Es kann vorgesehen sein, dass das Abfahren des zweiten Messwegs durch die Maschinenachsen der Koordinatenmessmaschine eine Bauteilrotation des Bauteils vor dem optischen Sensor aufweist, wobei der optische Sensor während der Messung translatorisch bewegt wird.

Gemäß einem zweiten Aspekt betrifft die Erfindung eine Koordinatenmessmaschine, eingerichtet zur Durchführung eines erfindungsgemäßen Verfahrens. Die Koordinatenmessmaschine kann ein reines Messgerät sein, das ausschließlich für Messaufgaben vorgesehen und geeignet ist. Die Koordinatenmessmaschine kann integraler Bestandteil einer Werkzeugmaschine sein, die zur spanabhebenden Bearbeitung verzahnter Bauteile eingerichtet ist.

Nachfolgend wird die Erfindung anhand einer Ausführungsbeispiele darstellenden Zeichnung näher beschrieben. Es zeigen jeweils schematisch:
Fig. 1 eine erfindungsgemäße Koordinatenmessmaschine;
Fig. 2 ein Zahnrad mit einem taktilen Messsystem;
Fig. 3 das Zahnrad aus Fig. 2 mit einem optischen Messsystem;

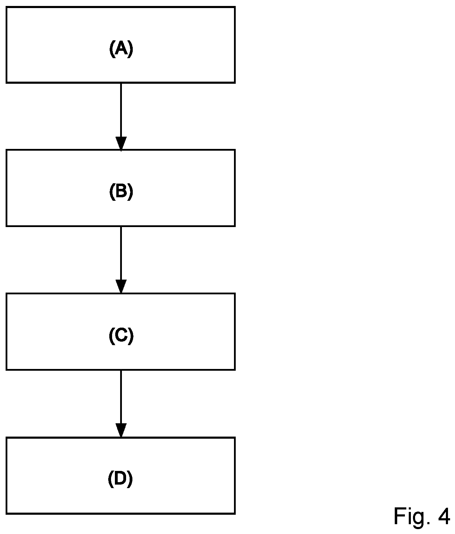

Fig. 4 einen Ablaufplan des erfindungsgemäßen Verfahrens.

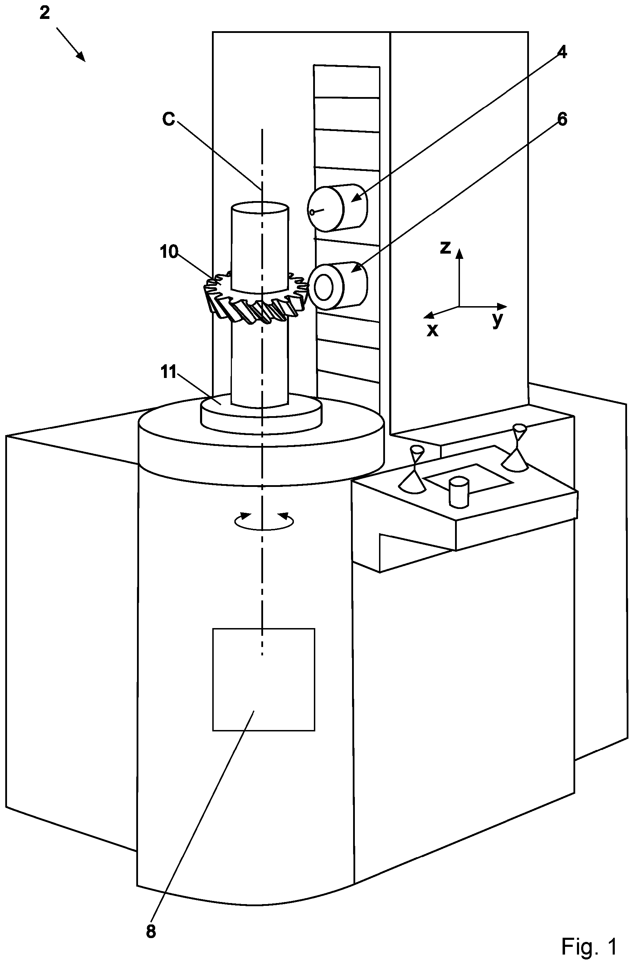

Fig. 1 zeigt eine erfindungsgemäße Koordinatenmessmaschine 2, die zur Ausführung eines erfindungsgemäßen Verfahrens eingerichtet ist. Die Koordinatenmessmaschine 2 hat einen ersten Sensor 4, der ein taktiler Sensor 4 zur Verzahnungsmessung ist, vorliegend ein Messtaster mit einer Tastkugel 5. Die Koordinatenmessmaschine 2 hat einen zweiten Sensor 6, der ein optischer Sensor zur Verzahnungsmessung ist. Vorliegend ist der optische Sensor 6 ein konfokal chromatischer Abstandssensor.

Die Koordinatenmessmaschine 2 hat eine Steuerungs- und Auswerteeinheit 8, die zur Steuerung relativer Messbewegungen zwischen den Sensoren 4, 6 und einem zu vermessenden verzahnten Bauteil 10 eingerichtet ist. Das verzahnte Bauteil 10 ist vorliegend ein Zahnrad. Weiter dient die Steuerungs- und Auswerteeinheit 8 zur Auswertung der von den Sensoren 4, 6 erfassten Messwerte.

Die Koordinatenmessmaschine 2 weist einen Drehtisch 11 auf, wobei das Zahnrad 10 mittels des Drehtischs 11 um eine Achse C rotiert werden kann. Die Koordinatenmessmaschine 2 weist zudem Linearantriebe auf, um die Sensoren 4, 6 translatorisch entlang der Achsen des kartesischen Koordinatensystems x, y, z zu verschieben und relative Messbewegungen zu dem Zahnrad 10 auszuführen.

In einem Verfahrensschritt (A) des erfindungsgemäßen Verfahrens erfolgt ein Bereitstellen des Zahnrads 10 an der Koordinatenmessmaschine 2.

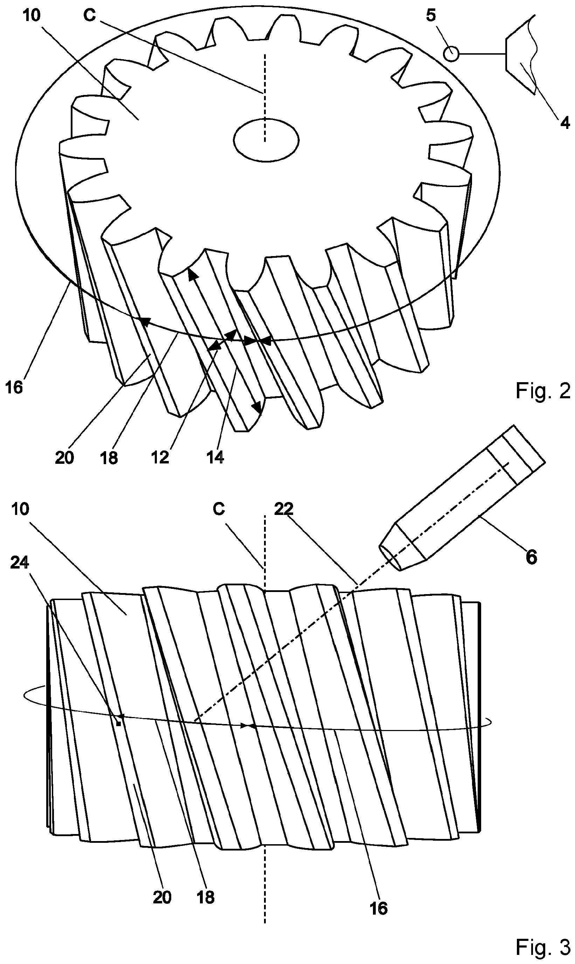

In einem Verfahrensschritt (B) erfolgt anschließend ein erstes Messen eines geometrischen Merkmals des Zahnrads 10 mittels des ersten Sensors 4, wie exemplarisch in Fig. 2 gezeigt. Dabei wird hier als geometrisches Merkmal des Zahnrads 10 z.B. eine Profillinie entlang eines Messwegs 12 gemessen und/oder eine Flankenlinie entlang eines Messwegs 14 gemessen. Durch die erste Messung ist die Position und Orientierung des Zahnrads 10 relativ zum optischen Sensor 6 bekannt, da die Messwerte der Geometrie des Zahnrads 10, die dreidimensionale Messwerte im Raum sind, aus Sensorwerten des ersten Sensors 4 und aus Achspositionen der Koordinatenmessmaschine 2 berechnet werden.

In einem Verfahrensschritt (C) erfolgt danach ein zweites Messen eines geometrischen Merkmals des verzahnten Bauteils 10 mittels des zweiten Sensors 6, wobei eine zweite relative Messbewegung zum Abfahren eines zweiten Messwegs 16 ausgeführt wird, wobei zweite Messwerte zur Bestimmung des geometrischen Merkmals erfasst werden.

Der zweite Messweg 16 weist eine Rotation des Zahnrads 10 um 360° auf und zusätzlich ein Winkelinkrement 18 auf, dass ergänzend zur Rotation um 360° der Rotation um 360° vorangestellt ist.

In einem Verfahrensschritt (D) erfolgt eine Auswertung der zweiten Messung unter Berücksichtigung der aus der ersten Messung bekannten Achspositionen.

Vorliegend werden Messwerte, die entlang des Winkelinkrements 18 während der zweiten Messung erfasst worden sind, nicht zur Auswertung des mittels der zweiten Messung zu erfassenden geometrischen Merkmals des Zahnrads 2 verwendet.

Vor dem zweiten Messen ist kein Vorpositionieren des zweiten Sensors 6 relativ zum verzahnten Bauteil 10 anhand eines Messwerts aus der ersten Messung erfolgt, sondern es wird in der Auswertung ein virtuelles Inbezugsetzen der Messwerte der zweiten Messung relativ zum verzahnten Bauteil 10 durchgeführt in dem Messwerte, die entlang des Winkelinkrements 18 gemessen worden sind, nicht als Startpunkt der Auswertung der zweiten Messung festgelegt werden, sondern der erste auf diese Messwerte des Winkelinkrements 18 folgende Messwert der zweiten Messwerte als Startpunkt der Auswertung der zweiten Messung festgelegt wird.

Insbesondere kann die Auswertung ausgehend von diesem Startwert aufsteigend gemäß dem den Messwerten zuordneten Winkel der Achsposition der C-Achse erfolgen.

Auf diese Weise kann sichergestellt werden, dass eine Auswertung einer zweiten Messung für jedes verzahnte Bauteil 10 beispielsweise immer an einem Zahnkopf 20 beginnt. Die Achsposition weist hierzu z.B. eine Information zu einer relativen Winkellage einer optischen Achse 22 des zweiten Sensors 6 zu einer Mitte 24 des Zahnkopfs 20 auf, um das virtuelles Inbezugsetzen zu ermöglichen bzw. das Winkelinkrement 18 zu berechnen.

Der zweite Messweg 16 weist daher eine Länge auf, die größer ist als eine zur Bestimmung des mittels der zweiten Messung zu bestimmenden geometrischen Merkmals minimal erforderliche Länge, da auf ein Vorpositionieren des zweiten Sensors 6 verzichtet wird.

### BEZUGSZEICHEN

- 2: Koordinatenmessmaschine
- 4: taktiler Sensor
- 5: Tastkugel
- 6: optischer Sensor
- 8: Steuerungs- und Auswerteinheit
- 10: Zahnrad
- 11: Drehtisch
- 12: Messweg
- 14: Messweg
- 16: Messweg
- 18: Winkelinkrement
- 20: Zahnkopf
- 22: optische Achse
- 24: Mitte des Zahnkopfs

## Patentansprüche

1. Verfahren, mit den Verfahrensschritten:
- Bereitstellen eines verzahnten Bauteils (10) auf einer Koordinatenmessmaschine (2), wobei die Koordinatenmessmaschine (2) einen ersten Sensor (4) zum Messen geometrischer Merkmale des verzahnten Bauteils (10) aufweist, einen zweiten Sensor (6) zum Messen geometrischer Merkmale des verzahnten Bauteils (10) aufweist und Bewegungsachsen zum Ausführen einer Messbewegung zur Erfassung von Messwerten an dem verzahnten Bauteil (10) aufweist;
- Erstes Messen eines geometrischen Merkmals des verzahnten Bauteils (10) mittels des ersten Sensors (4) und/oder des zweiten Sensors (6), wie eine Zahnteilung, eine Flankenlinie einer Zahnflanke, eine Profillinie einer Zahnflanke oder dergleichen, wobei eine erste relative Messbewegung zum Abfahren eines ersten Messwegs (12, 14) ausgeführt wird, wobei einer oder mehrere erste Messwerte zur Bestimmung des geometrischen Merkmals erfasst werden;
- Zweites Messen eines geometrischen Merkmals des verzahnten Bauteils (10) mittels des ersten Sensors (4) und/oder des zweiten Sensors (6), wie eine Zahnteilung eine Flankenlinie einer Zahnflanke, eine Profillinie einer Zahnflanke oder dergleichen, wobei eine zweite relative Messbewegung zum Abfahren eines zweiten Messwegs (16) ausgeführt wird, wobei zweite Messwerte zur Bestimmung des geometrischen Merkmals erfasst werden;
**dadurch gekennzeichnet, dass**
- eine Auswertung der zweiten Messung unter Berücksichtigung einer aus der ersten Messung bekannten Achsposition erfolgt.

2. Verfahren nach Anspruch 1,
**dadurch gekennzeichnet, dass**
vor dem zweiten Messen kein Vorpositionieren des zweiten Sensors relativ zum verzahnten Bauteil (10) anhand eines aus der ersten Messung bekannten Messwerts erfolgt.

3. Verfahren nach Anspruch 1 oder Anspruch 2,
**dadurch gekennzeichnet, dass**
anhand der Achsposition eine Reihenfolge der zweiten Messwerte für die Auswertung der zweiten Messung bestimmt wird;
und/oder
anhand der Achsposition ein Messwert der zweiten Messwerte als Startpunkt der Auswertung der zweiten Messung festgelegt wird;
und/oder
in der Auswertung anhand der Achsposition Messwerte der zweiten Messwerte ermittelt werden, die nicht zur Bestimmung des geometrischen Merkmals gemäß der zweiten Messung erforderlich sind
und/oder
in der Auswertung ein virtuelles Inbezugsetzen der Messwerte der zweiten Messung relativ zum verzahnten Bauteil (10).

4. Verfahren nach einem der voranstehenden Ansprüche,
**dadurch gekennzeichnet,**
**dass** der zweite Messweg (16) eine Länge aufweist, die größer ist als eine zur Bestimmung des mittels der zweiten Messung zu bestimmenden geometrischen Merkmals minimal erforderliche Länge,
und/oder
**dass** der zweite Messweg (16) einen ersten Wegabschnitt und einen zweiten Wegabschnitt hat, wobei entlang des ersten Wegabschnitts Zusatzmesswerte erfasst werden, die nicht zur Bestimmung des mittels der zweiten Messung zu bestimmenden geometrischen Merkmals des verzahnten Bauteils (10) erforderlich sind und wobei entlang des zweiten Wegabschnitts diejenigen zweiten Messwerte erfasst werden, die zur Bestimmung des geometrischen Merkmals des verzahnten Bauteils erforderlich sind.

5. Verfahren nach einem der voranstehenden Ansprüche,
**dadurch gekennzeichnet,**
**dass** aus der Achsposition ein Winkelinkrement und/oder ein Weginkrement bestimmt werden, die einen Abstand des für die zweite Messung verwendeten Sensors (4, 6) zu einem als Auswertebeginn geeigneten geometrischen Bezug des verzahnten Bauteils (10) definieren.

6. Verfahren nach Anspruch 5,
**dadurch gekennzeichnet, dass**
das Winkelinkrement und/oder ein Weginkrement einem zur Erfassung des mittels der zweiten Messung zu bestimmenden geometrischen Merkmals des verzahnten Bauteils (10) minimal erforderlichen Messweg hinzugefügt wird, um den zweiten Messweg (16) zu definieren.

7. Verfahren nach Anspruch 6,
**dadurch gekennzeichnet, dass**
das Winkelinkrement und/oder ein Weginkrement dem zur Bestimmung des mittels der zweiten Messung zu bestimmenden geometrischen Merkmals des verzahnten Bauteils minimal erforderlichen Messweg (16) vorangestellt wird.

8. Verfahren nach einem der Ansprüche 5 - 7,
**dadurch gekennzeichnet, dass**
zweite Messwerte, die entlang des Winkelinkrements und/oder des Weginkrements erfasst worden sind, nicht als Startpunkt der Auswertung festgelegt werden und/oder nicht zur Bestimmung des geometrischen Merkmals der zweiten Messung ausgewertet werden.

9. Verfahren nach einem der voranstehenden Ansprüche,
**dadurch gekennzeichnet, dass**
die Achsposition eine Information zu einer relativen Position und/oder Orientierung des Zahnrads zu dem die zweite Messung durchführenden ersten oder zweiten Sensor (4, 6) aufweist.

10. Verfahren nach einem der voranstehenden Ansprüche,
**dadurch gekennzeichnet,**
**dass** der zweite Sensor (6) ein optischer Sensor (6) ist.

11. Verfahren Anspruch 9 oder Anspruch 10,
**dadurch gekennzeichnet, dass**
die Achsposition eine Information zu einer relativen Winkellage einer optischen Achse (22) des zweiten Sensors (6) zu einem Bezugspunkt, einer Bezugslinie oder einer Bezugsfläche des verzahnten Bauteils aufweist, wie ein Zahnkopf, ein Zahnfuß, eine Kopfkante, eine Flankenlinie, eine Profillinie, eine Mitte eines Zahnkopfs, eine Mitte eines Zahnfußes, eine Mitte einer Zahnflanke oder dergleichen.

12. Verfahren nach einem der voranstehenden Ansprüche,
**dadurch gekennzeichnet, dass**
der erste Sensor (4) ein taktiler Sensor (4) ist, wie ein Messtaster mit einer Tastkugel (5) oder dergleichen.

13. Verfahren nach einem der voranstehenden Ansprüche 10 oder 11 und nach Anspruch 12,
**dadurch gekennzeichnet, dass**
die erste Messung taktil mittels des taktilen Sensors (4) erfolgt und dass die zweite Messung optisch mittels des optischen Sensors (6) erfolgt.

14. Verfahren nach einem der voranstehenden Ansprüche,
**dadurch gekennzeichnet, dass**
das Abfahren des zweiten Messwegs (16) eine Rotation des verzahnten Bauteils (10) um mehr als 360° um seine eigene Achse relativ zu dem die zweite Messung durchführenden Sensor (4, 6) aufweist.

15. Koordinatenmessmaschine,
eingerichtet zur Durchführung eines Verfahrens nach einem der voranstehenden Ansprüche.
